# EUROPÄISCHE PATENTSCHRIFT

(11) **EP 1 916 418 B1**
(45) Veröffentlichungstag und Bekanntmachung des Hinweises auf die Patenterteilung: **30.12.2009**
(21) Anmeldenummer: 07016694.7
(22) Anmeldetag: 25.08.2007
(51) Int. Cl.: F03D 11/00, F16C 33/66, F16N 7/14, F16N 11/04

(54) **Vorrichtung zum Schmieren eines Wälzlagers bei einer Windenergieanlage**
Device for greasing a roller bearing in a wind motor
Dispositif destiné au graissage d'un palier à roulement dans une éolienne

(30) Priorität: 27.10.2006 DE 102006050765
(43) Veröffentlichungstag der Anmeldung: 30.04.2008
(73) Patentinhaber: Nordex Energy GmbH, 22848 Norderstedt (DE)
(72) Erfinder: Kroh, Uwe, 18059 Rostock (DE); Voss, Eberhard, Dr., 18233 Jörnstorf (DE)
(74) Vertreter: Schildberg, Peter

(56) Entgegenhaltungen:
- EP-A- 1 273 814
- EP-A- 1 423 606
- US-B1- 6 267 147

## Beschreibung

Die vorliegende Erfindung betrifft eine Vorrichtung zum Schmieren eines Wälzlagers bei einer Windenergieanlage.

Aus EP 1 423 606 B 1 ist eine Anstellwinkelverstelleinrichtung eines Rotorblatts mit einer umlaufenden Schmiermittelkammer bekannt. Die Schmiermittelkammer umschließt ein Zahnrad, über das der Anstellwinkel für das Rotorblatt verstellt wird. Die bekannte Schmiermittelkammer läuft um das Lager herum und bildet für die Wälzkörper und für die Verzahnung einen ausreichend großen Volumenbereich. Die Schmiermittelkammer ist dabei eine an das Wälzlager angesetzte Kammer.

Aus EP 1 273 814 A1 ist eine Vorrichtung zum Schmieren eines Wälzlagers bekannt, bei der ein Schmiermittelreservoir an den Außenring eines Wälzlagers angesetzt ist. Über einen Schmiermittelkanal wird das Schmiermittel zum Wälzkörper geführt, von wo aus es sich dann verteilt. Das Schmiermittel wird in einem ebenfalls am Außenring angebrachten Schmiermittelbehälter gesammelt.

Der Erfindung liegt die Aufgabe zugrunde, für ein Wälzlager bei einer Windenergieanlage eine Vorrichtung zum Schmieren des Wälzlagers bereitzustellen, die es erlaubt, mit einfachen Mitteln Schmiermittel dem Wälzlager zuzuführen.

Die erfindungsgemäße Aufgabe wird durch eine Vorrichtung mit den Merkmalen aus Anspruch 1 gelöst. Vorteilhafte Ausgestaltungen bilden die Gegenstände der Unteransprüche.

Die erfindungsgemäße Vorrichtung dient zum Schmieren eines Wälzlagers bei einer Windenergieanlage. Ein solches Wälzlager kann beispielsweise die Pitchverstellung zwischen Rotorblattwurzel und Rotorblattnabe sein. Grundsätzlich kann das aber auch ein Wälzlager wie beispielsweise das Azimutlager sein. Die erfindungsgemäße Vorrichtung besitzt einen Behälter für Schmierstoffe, der eine Kammer aufweist. Die Kammer in dem Behälter ist durch einen beweglich gelagerten Kolben in einen Kammerabschnitt für frische Schmierstoffe und einen Kammerabschnitt für gebrauchte Schmierstoffe unterteilt. Jeder der Kammerabschnitte ist über mindestens eine Leitung mit mindestens einem durch das Wälzlager führenden Schmierstoffkanal verbunden. Über die Zuleitung erfolgt der Transport von frischem Schmierstoff in das Wälzlager, wo es nach dem Durchlaufen des Schmierstoffkanals wieder austritt und über eine Leitung in den Kammerabschnitt für den gebrauchten Schmierstoff zurückgeführt wird. Der Schmierstoffkanal in dem Wälzlager kann dabei auch die Laufbahn für die Wälzkörper umfassen. Ein besonderer Vorteil bei der erfindungsgemäßen Ausführung besteht darin, daß ein gemeinsamer Behälter für frischen und gebrauchten Schmierstoff vorgesehen ist.

In einer bevorzugten Weiterführung der erfindungsgemäßen Gestaltung ist der Kolben in der Kammer durch ein Federmittel vorgespannt, um das Volumen des Kammerabschnitts für den frischen Schmierstoff zu verkleinern und das Volumen des Kammerabschnitts für den gebrauchten Schmierstoff zu vergrößern. Das Federmittel bewirkt auf diese Weise, daß frischer Schmierstoff in das Wälzlager gedrückt wird und gebrauchter Schmierstoff aus dem Wälzlager gesaugt wird. Zudem wird durch den schwimmenden Kolben festgelegt, daß ein in das Wälzlager eingebrachtes Volumen an Schmierstoff auch im Wesentlichen wieder entnommen wird.

In einer bevorzugten Weiterbildung der erfindungsgemäßen Vorrichtung sind die Leitungen, die von dem Kammerabschnitt für frische Schmierstoffe zu dem Wälzlager führen, und/oder die entsprechende Rückleitung von dem Wälzlager in Kammerabschnitt für gebrauchte Schmierstoffe jeweils mit einem Absperrventil oder einem Absperrhahn versehen. Ein Absperren dieser Leitung unterbricht jeweils den Strom an Schmierstoff in das Lager und den Strom an Schmierstoff aus dem Lager. Hierdurch kann beispielsweise beim Wechseln des Schmierstoffbehälters Zu- und Abfluß gesperrt werden. Auch kann bei sonstigen Wartungsarbeiten des Lagers beispielsweise die Menge an eintretendem bzw. an durchgeleitetem Schmierstoff eingestellt werden.

Um einfacher feststellen zu können, wie weit bereits der Schmierstoff durchgelaufen ist, kann an dem Behälter ein Anzeigemittel vorgesehen sein, das die Stellung des Kolbens in dem Behälter anzeigt.

In einer ebenfalls möglichen Variante kann in mindestens einer der Leitungen zwischen Behälter und Wälzlager eine Pumpe vorgesehen sein, die den Schmierstofffluß durch das Wälzlager fördert.

In einer bevorzugten Weiterbildung der erfindungsgemäßen Vorrichtung ist der Behälter mit einer verschließbaren Öffnung versehen, die im Bereich des Kammerabschnitts für frischen Schmierstoff angeordnet ist, um bei minimalem Volumen des Kammerabschnitts dieses mit der Umgebung zu verbinden. Für das Nachfüllen von frischem Schmierstoff wird, wenn der Kolben sich weit vorgeschoben hat, frischer Schmierstoff über die Einfüllöffnung zugeführt. Über eine entsprechende Öffnung für den gebrauchten Schmierstoff kann bevorzugt gebrauchter Schmierstoff aus dem Behälter abgelassen werden. Auch hierzu ist die Öffnung nahe dem Ende des Behälters angeordnet.

Um das Wälzlager gleichmäßig mit Schmierstoff zu versorgen, kann der Behälter mit mehreren Leitungen verbunden sein, die jeweils mit einer Öffnung eines oder mehrerer durch das Wälzlager führenden Schmierstoffkanäle verbunden sind. Hierbei ist es möglich, daß der Behälter selbst mit mehreren Leitungen verbunden ist oder daß der Behälter mit einer Hauptleitung verbunden ist, von der mehrere Stichleitungen abzweigen, die dann jeweils zu einer Öffnung des Schmierstoffkanals führen.

Die erfindungsgemäße Vorrichtung wird nachfolgend anhand eines Ausführungsbeispiels näher erläutert. Es zeigt:
- Fig. 1: eine schematische Ansicht des erfindungsgemäßen Schmierstoffbehälters und
- Fig. 2: eine schematische Ansicht zum Anschluß des Schmiermittelbehälters an ein Wälzlager.

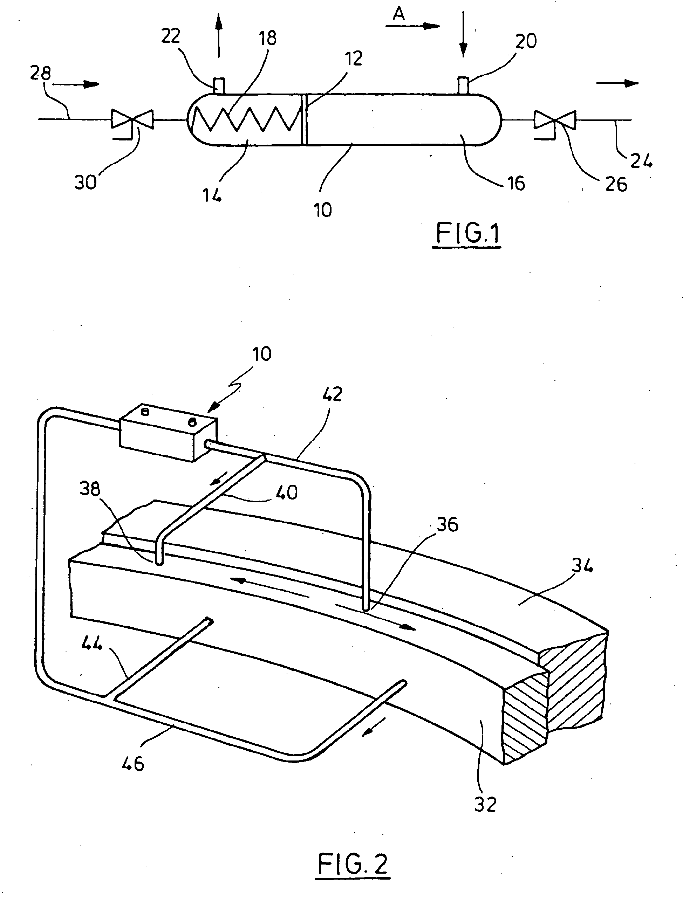

In Fig. 1 dargestellt ist ein Behälter 10 für Schmierstoff (nicht dargestellt). Der Behälter 10 wird durch einen verschieblichen Kolben 12 in zwei Kammern 14 und 16 unterteilt. Der Kolben 12 ist durch eine Feder 18 in Richtung A vorgespannt. In den Endbereichen des Behälters 10 sind zwei verschließbare Öffnungen 20 und 22 vorgesehen, wobei über die Öffnung 22 gebrauchter Schmierstoff abgelassen und über die Öffnung 20 frischer Schmierstoff zugeführt wird. Ferner ist der Kammerabschnitt 16 für frischen Schmierstoff über eine Leitung 24 mit dem Wälzlager verbunden. Die Leitung 24 ist mit einem Absperrhahn 26 versehen, der es erlaubt, den Schmierstofffluß vollständig zu unterbinden.

Über eine Leitung 28 wird der gebrauchte Schmierstoff im Kammerabschnitt 14 zugeführt. Leitung 28 ist über einen Absperrhahn 30 verschließbar.

Figur 2 zeigt in einer schematischen Ansicht den Ausschnitt eines Wälzlagers mit Innenring 32 und Außenring 34. Über den Innenring 32 verteilt sind mehrere Eingänge 36, 38 für Schmierstoff vorgesehen. Den Eingängen 36, 38 wird über eine Leitung 40, 42 frischer Schmierstoff zugeführt. Der dem Wälzlager zugeführte Schmierstoff verteilt sich über die Laufrinne und tritt über Schmierstoffkanäle (nicht dargestellt) wieder am Innenring 32 über Leitungen 44, 46 aus. Die Leitungen 44, 46 werden zusammengeführt und münden in den Schmierstoffbehälter 10. Neben der dargestellten Schmierung über den Innenring kann auch eine Schmierung über den Außenring 34 erfolgen.

Im Betrieb ist der Schmierstoffbehälter 10 mit Schmierstoff gefüllt. Über die Feder 18 ist der Kolben 12 in Richtung A vorgespannt, so daß der frische Schmierstoff aus dem Kammerabschnitt 16 bei geöffnetem Absperrhahn 26 in die Leitung 24 gedrückt wird. Zugleich saugt der sich bewegende Kolben im Kammerabschnitt 14 gebrauchten Schmierstoff über die Leitung 28 an, wenn der Absperrhahn 30 geöffnet ist. Insgesamt bietet die erfindungsgemäße Vorrichtung einen kompakten Schmierstoffbehälter, der überaus wartungsarm ist.

## Patentansprüche

1. Vorrichtung zum Schmieren eines Wälzlagers einer Windenergieanlage, mit einem Behälter für Schmierstoff, der eine Kammer aufweist, die durch einen beweglichen Kolben (12) in einen Kammerabschnitt (16) für frischen Schmierstoff und einen Kammerabschnitt (14) für gebrauchten Schmierstoff unterteilt ist, wobei jeder Kammerabschnitt (14, 16) über eine Leitung (24, 28) mit einem durch das Wälzlager (32) führenden Schmierstoffkanal verbunden ist.

2. Vorrichtung nach Anspruch 1, **dadurch gekennzeichnet, daß** der Kolben (12) in der Kammer durch ein Federmittel (18) vorgespannt ist, um das Volumen des Kammerabschnitts (16) für den frischen Schmierstoff zu verkleinern und das Volumen des Kammerabschnitts (18) für den gebrauchten Schmierstoff zu vergrößern.

3. Vorrichtung nach einem der Ansprüche 1 oder 2, **dadurch gekennzeichnet, daß** die Leitung von dem Kammerabschnitt für frische Schmierstoffe zu dem Wälzlager mit einem Absperrhahn (26) versehen ist.

4. Vorrichtung nach einem der Ansprüche 1 bis 3, **dadurch gekennzeichnet, daß** die Leitung von dem Wälzlager zu dem Kammerabschnitt für den gebrauchten Schmierstoff mit einem Absperrhahn (30) versehen ist.

5. Vorrichtung nach einem der Ansprüche 1 bis 4, **dadurch gekennzeichnet, daß** an dem Behälter ein Anzeigemittel vorgesehen ist, das die Stellung des Kolbens anzeigt.

6. Vorrichtung nach einem der Ansprüche 1 bis 5, **dadurch gekennzeichnet, daß** in mindestens einer der Leitungen zwischen Behälter und Wälzlager eine Pumpe für Schmierstoff vorgesehen ist.

7. Vorrichtung nach einem der Ansprüche 1 bis 6, **dadurch gekennzeichnet, daß** der Behälter eine verschließbare Öffnung aufweist, die im Bereich des Kammerabschnitts (16) für frischen Schmierstoff angeordnet ist, um bei minimalem Volumen des Kammerabschnitts (16) diesen mit der Umgebung zu verbinden.

8. Vorrichtung nach einem der Ansprüche 1 bis 7, **dadurch gekennzeichnet, daß** der Behälter eine verschließbare Öffnung aufweist (22), die im Bereich des Kammerabschnitts für gebrauchte Schmierstoffe angeordnet ist, um bei minimalem Volumen des Kammerabschnitts diesen mit der Umgebung zu verbinden.

9. Vorrichtung nach einem der Ansprüche 1 bis 8, **dadurch gekennzeichnet, daß** der Behälter (10) mit einer oder mehreren Leitungen (40, 42, 44, 46) verbunden ist, die jeweils mit einer Öffnung eines oder mehrerer durch das Wälzlager führenden Schmierstoffkanäle verbunden sind.

## Claims

1. An apparatus for the lubrication of a roller bearing of a wind energy plant, with a container for lubricant having a chamber, which is divided into a chamber portion (16) for fresh lubricant and a chamber portion (14) for used lubricant through a movable piston (12), wherein each chamber portion (14, 16) is connected via a line (24, 28) to a lubricant channel passing through the roller bearing (32).

2. An apparatus according to claim 1, **characterised in that** the piston (12) in the chamber is pretensioned by a spring means (18) in order to reduce the volume of the chamber portion (16) for the fresh lubricant and to increase the volume of the chamber portion (18) for the used lubricant.

3. An apparatus according to any one of claims 1 or 2, **characterised in that** the line from the chamber portion for fresh lubricants to the roller bearing is provided with a stop valve (26).

4. An apparatus according to any one of claims 1 to 3, **characterised in that** the line from the roller bearing to the chamber portion for used lubricant is provided with a stop valve (30).

5. An apparatus according to any one of claims 1 to 4, **characterised in that** an indicating means is provided on the container, which indicates the position of the piston.

6. An apparatus according to any one of claims 1 to 5, **characterised in that** a pump for lubricant is provided in at least one of the lines between container and roller bearing.

7. An apparatus according to any one of claims 1 to 6, **characterised in that** the container has a closable opening, which is arranged in the region of the chamber portion (16) for fresh lubricant, in order to connect the same with the surroundings at minimum volume of that chamber portion (16).

8. An apparatus according to any one of claims 1 to 7, **characterised in that** the container has a closable opening (22), which is arranged in the region of the chamber portion for used lubricants, in order to connect the same with the surroundings at minimum volume of that chamber portion.

9. An apparatus according to any one of claims 1 to 8, **characterised in that** the container (10) is connected to one or plural lines (40, 42, 44, 46), which are each one at a time connected to an opening of one or plural lubricant channels passing through the roller bearing.

## Revendications

1. Dispositif destiné au graissage d'un palier à roulement d'une éolienne, avec un réservoir à lubrifiant, qui présente une chambre qui est subdivisée par un piston mobile (12) en une section de chambre (16) pour lubrifiant frais et une section de chambre (14) pour lubrifiant usagé, dans lequel chaque section de chambre (14, 16) est reliée par une conduite (24, 28) à un canal de graissage conduisant à travers le palier à roulement (32).

2. Dispositif selon la revendication 1, **caractérisé en ce que** le piston (12) est prétendu dans la chambre par un moyen de ressort (18) pour réduire le volume de la section de chambre (16) pour le lubrifiant frais et augmenter le volume de la section de chambre (18) pour le lubrifiant usagé.

3. Dispositif selon l'une des revendications 1 ou 2, **caractérisé en ce que** la conduite de la section de chambre pour lubrifiants frais au palier à roulement est pourvue d'un robinet d'arrêt (26).

4. Dispositif selon l'une des revendications 1 à 3, **caractérisé en ce que** la conduite du palier à roulement à la section de chambre pour le lubrifiant usagé est pourvue d'un robinet d'arrêt (30).

5. Dispositif selon l'une des revendications 1 à 4, **caractérisé en ce qu'**un moyen d'indication est prévu sur le réservoir, qui indique la position du piston.

6. Dispositif selon l'une des revendications 1 à 5, **caractérisé en ce que** dans au moins une des conduites entre le réservoir et le palier à roulement, une pompe à lubrifiant est prévue.

7. Dispositif selon l'une des revendications 1 à 6, **caractérisé en ce que** le réservoir présente une ouverture pouvant être fermée qui est disposée dans la zone de la section de chambre (16) pour lubrifiant frais pour, quand le volume de la section de chambre (16) est au minimum, relier celle-ci à l'environnement.

8. Dispositif selon l'une des revendications 1 à 7, **caractérisé en ce que** le réservoir présente une ouverture pouvant être fermée (22) qui est disposée dans la zone de la section de chambre pour lubrifiants usagés pour, quand le volume de la section de chambre est au minimum, relier celle-ci à l'environnement.

9. Dispositif selon l'une des revendications 1 à 8, **caractérisé en ce que** le réservoir (10) est relié à une ou plusieurs conduites (40, 42, 44, 46) qui sont reliées respectivement à une ouverture d'un ou de plusieurs canaux de graissage conduisant à travers le palier à roulement.
